# EUROPEAN PATENT SPECIFICATION

(11) **EP 1 046 270 B1**
(45) Date of publication and mention of the grant of the patent: **15.09.2004**
(21) Application number: 99900540.8
(22) Date of filing: 05.01.1999
(51) Int. Cl.: H04M 3/50, H04Q 3/00

(54) **TELECOMMUNICATIONS NETWORKS**
VERMITTLUNGSNETZE
RESEAUX DE TELECOMMUNICATIONS

(30) Priority: 08.01.1998 EP 98300126; 08.01.1998 GB 9800374
(43) Date of publication of application: 25.10.2000
(73) Proprietor: BRITISH TELECOMMUNICATIONS public limited company, London EC1A 7AJ (GB)
(72) Inventor: LAM, Kenneth, Hoo-Yin, Ipswich, Suffolk IP4 4DG (GB)
(86) International application number: PCT/GB1999/000020
(87) International publication number: WO 1999/035808

(56) References cited:
- EP-A- 0 529 948
- WO-A-97/23988
- US-A- 4 932 042
- US-A- 5 347 574

## Description

The present invention relates to telecommunications networks and more particularly to services provided thereby.

Customers of telecommunications network operators, for example those who provide public switched telephone network services, are often offered extremely sophisticated services based in the network rather than in ancillary customer premises based equipments. For example, telephone answering machines which are home based are limited to answering telephone calls when the customer line is free while a network based telephone answering service may use the sophistication of the network to provide a corresponding answering service when the customer line is busy or if there is no reply in addition to providing a basic answering function. Because the service is based in the network it is simpler for the customer to access the system on a remote basis from other than his base location. Further, because the system is network based the shared capital costs enables significant functionality to be built into the answering service.

In one example of a network based digital answering facility disclosed in US 5,347,574 calling line identity signals are used to selectively direct calls to an answering service in certain circumstances. Where a common destination telephone number is in use then on accessing the answering facility all potential message recipients at the destination telephone number may have access to all of the messages held therein.

Increasingly, PSTN operators are turning to intelligent network functionality and service platforms based in the network to provide service to customers of a specialised nature. In the digital PSTN operated by British Telecommunications pic in the UK a speech applications platform provides a "call minder" (trade mark) service.

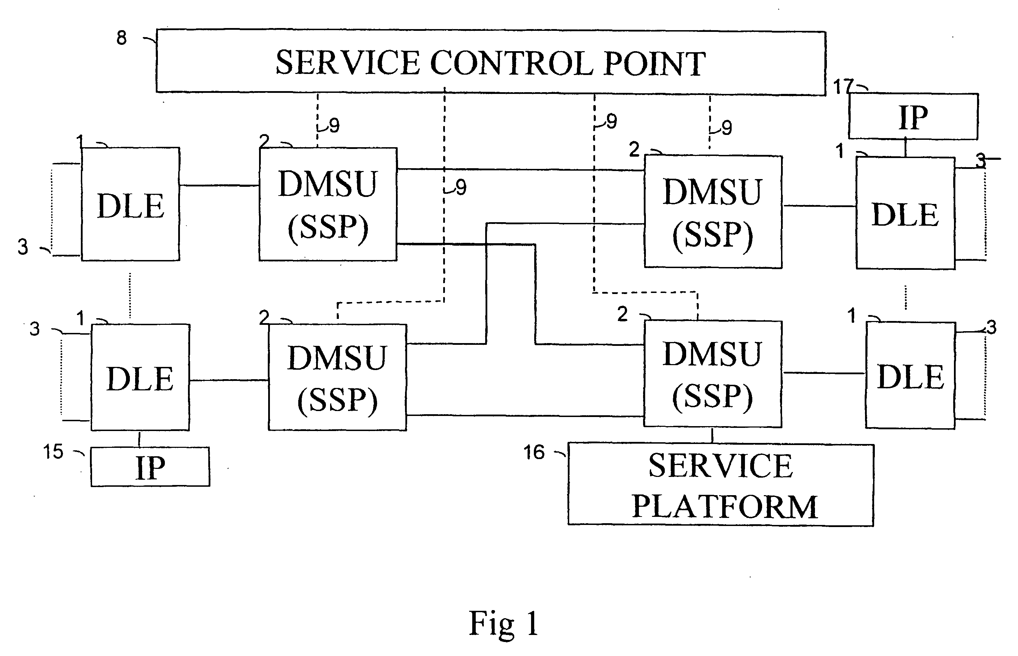

In a typical intelligent network, referring to Figure 1 customer lines 3 are connected via digital local exchanges (DLEs) 1 which are fully interconnected by way of digital main switching units (DMSUs) 2 sometimes referred to as service switching points (SSPs). Some DLEs may incorporate intelligent network SSP functionality enabling intelligent network sophistication to be brought to an extremely low level in the network. A service control point (SCP) 8 is accessible by way of signalling paths 9 to intelligence based on the SSPs 2. Thus, intelligence within the SSPs on receipt of signalling from customer premises by way of the lines 3 and the DLEs 1 apply to the SCP with information such as the calling line identity of the originating party and the telephone number dialled and may seek instruction on the further handling of the call. Similarly, a SSP receiving a terminating call, that is a call for a called party, may apply to the SCP 8 for instructions in setting up the call.

So called intelligent peripherals 15, 17 for providing such functions as prompt and collect or other announcements may be provided in the network. More sophisticated services may be based on so called service platforms 16. It will be appreciated that since the service platforms and intelligent peripherals are network based any customer line 3 may be connected through the SSP 2 to any intelligent peripheral or service platform under control of intelligence in the SSPs in accordance with programming in the SCP.

By providing triggering in response to the network signalling of dialled telephone numbers or originating CLI it is possible to introduce diversion to service platforms or intelligent peripherals for different functions without significantly modifying the intelligence in the localised SSPs in the network.

One of the problems with a telephone answering service whether network based or dependent upon a home answering machine is that where customers share a telephone, for example in homes in multiple occupation messages left for one person may be accidentally or intentionally listened to by other persons. In any event it may be necessary for each member of the household to scan all of the messages to determine for which party the message has been left. This may result in a breech of confidentiality or in embarrassment in certain circumstances.

According to the present invention there is provided a telecommunications network including a network based telephone answering services to which calls for a particular network destination may be diverted, the network including control means programmable by customer action to select conditions under which some or all calls for the destination are diverted, the answering service further including means selectively to store respective messages and to associate such messages with a particular one of a plurality of customers of the destination in response to predetermined characteristics for an incoming call, and means to selectively play messages only on receipt of signals identifying a particular customer.

Preferably, the telephone answering service includes means to provide to a caller a listing of parties and signalling identity for said parties and to prompt said customer to key one or more additional signals to identify said respective customer, the system associating messages with particular customers in dependence upon the signal received.

Alternatively, the answering system may includes means responsive to signals identifying the calling party line with customer storage space.

If a call cannot be associated with a particular customer, for example because the calling party declines to key in a response to an invitation, calls may be stored for access by any individual using the service such that on completion of delivery of messages for a particular person general messages may also be delivered.

A telecommunications network including a service platform providing a telephone answering service in accordance with the invention will now be described by way of example only with reference to the accompanying drawings of which:
Figure 1 is a block schematic diagram of a typical intelligent network;
Figure 2 is a flow chart showing the operation for the telecommunications network of Figure 1 on receipt of a call for a connected destination;
Figure 3 comprising Figures 3a and 3b shows the operation of the service platform 16 of Figure 1 on application for retrieval of messages;
Figure 4 shows a signal interaction between a SSP and the SCP subsequent to triggering of the SSP by an active destination; and
Figure 5 is a schematic representation of data stored in the service platform 16 of Figure 1.

In the known call minder service, a speech applications platform (service platform) is provided in the network. A customer of one of the lines 3 who has subscribed for the service is provided with a code to dial for access to the service platform 16. By use of the customer key pad transmitting multi-frequency tones, it is possible for the customer to select a number of operations in respect of exchange activity on receipt of a call for the customer's line. Thus, in a basic service mode all incoming calls for that destination may be diverted to the service platform, calls when the line 3 is already engaged may be diverted and/or calls may be diverted if there is no reply within a predetermined period after ringing is applied to the customer line. Within the call minder platform the customer is able to dictate one or more introductory messages for transmission to a calling customer in each or any of the circumstances described above.

Calls incoming to the line 3 will therefore cause triggering at one of the SSPs 2 and the SCPs will cause information to be returned to the SSP so that the incoming call is diverted to the service platform 16 together with the called line identity. The service platform 16 will cause an announcement of the customer's message or of a standard message and will invite the caller to deposit a message for the destination.

When one or more messages are stored in the service platform 16 for a destination number represented by an exchange line 3 the SSP may be caused to modify dial tone provided to the customer so that the customer is aware of messages waiting. The customer may now call the service platform from the home telephone and retrieve messages left.

Alternatively, the customer may dial from a remote location using his own telephone number. Once the call is diverted to the service platform 16 the caller may interrupt the announcement and will be invited to provide signalling representing a personal identification number (PIN) so that message can be retrieved remotely. This also allows the service options at the service platform 16 to be amended.

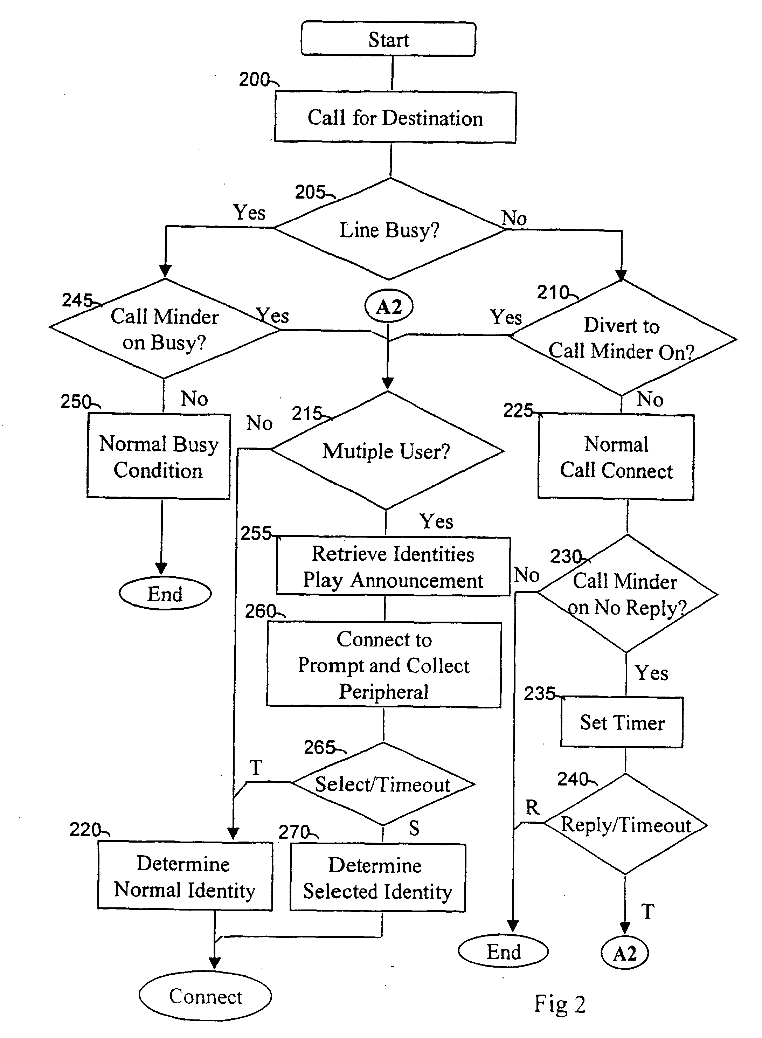

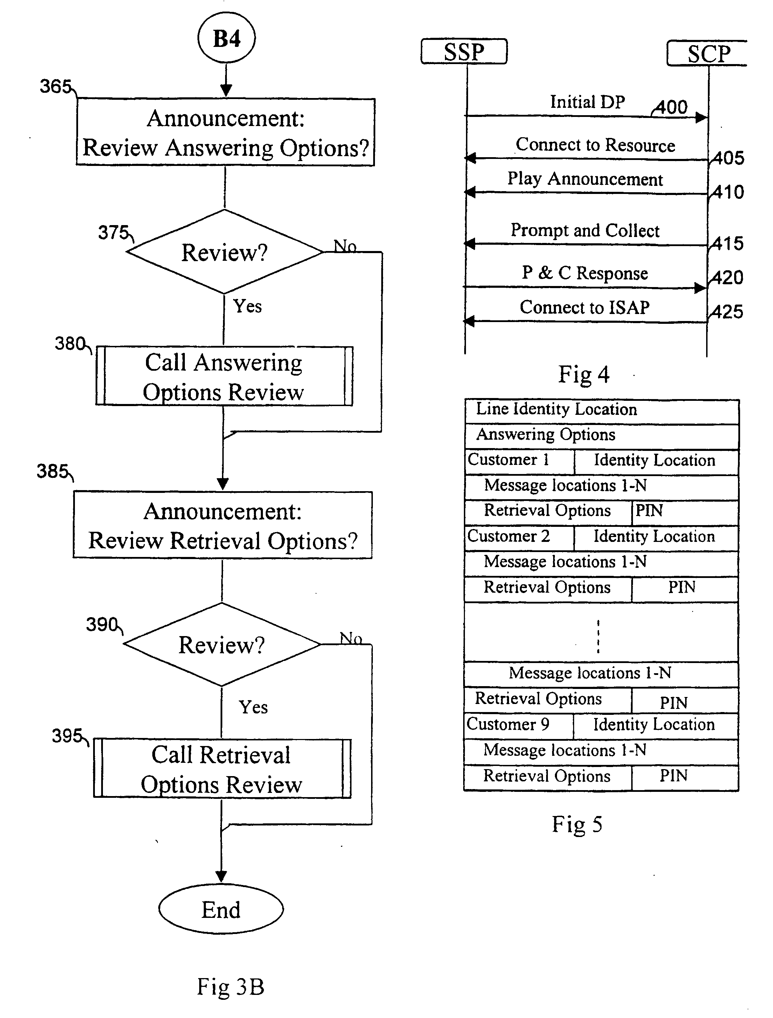

Referring now to Figure 2, when homes are in multiple occupation such that a particular telephone line 3 serves a number of individuals, then the present invention provides for each person to separately subscribe for call minder service. Thus if there is a call for the destination as indicated at step 200, and referring additionally to Figure 4, triggering at the SSP causes a C7 network signal to be sent to the SCP 8 from the SSP requesting instructions. If the line is not busy as indicated at step 205, a check is carried out at step 210 to determine whether the call minder function is selected. If the call answering function is in operation for all calls as indicated at step 210 then at step 215 a determination is made as to whether this is a multiple user destination. If not, then as indicated at step 220, the call is connected to the service platform 16 in a normal single line manner. Similarly, returning briefly to step 210, if the all call divert function is not selected then a call is connected normally to the line 3 and ringing applied at step 225. While the call is ringing the system carries out a check to determine whether a selected answering option is to connect the call answering service if there is no reply, if not then no further action is taken. As thus far described the service is no different to other call answering services which are network based. If call minder on no reply is set as a call answering option, then at step 235 a timer will be started and the line monitored for a reply within the time out period. Thus at step 240, if the call is answered in normal manner then no further monitoring is required in respect of the call answering service. If, however, at step 240 the timer set at step 235 expires, then the system will skip to step 215 again to determine if this is a multiple user application.

Returning now to step 205, if the line is busy, then at step 245 the answering options for the line are checked and again if the option is not selected normal busy conditions will be returned to the calling party at step 250.

If, at step 245, call minder on busy is set in the options for answering then the system again steps to determine whether a multiple user location is being called. Now at step 215, if the system determines that this is a multiple user destination, then as indicated at step 405 of Figure 4 the SCP 8 will cause the SSP to effect connection of one of the intelligent peripherals say 15 to cause an announcement to be played. Thus returning to Figure 2, at step 255, the identities of each destination user and a respective code for leaving messages specifically for that user may be provided. Thus, at step 410 the SCP will cause the SSP to play an announcement which may be of the form for example "welcome to BT's call minder service. To leave a message for John please press 1, to leave a message for Paul please press 2, to leave a message for ... etc.". The intelligent peripheral say 16 having played the announcement will monitor the incoming line from the calling party for a signal to indicate that a message should be left for a particular party. This is indicated at 415 of Figure 4 and step 260 of Figure 2. At the same time as connecting to the prompt and collect peripheral, a timer is started so that if the calling customer does not select a particular person to leave a message for at step 265, when the time expires the call is returned to the service platform 16 with basic call minder identity response. Thus the SCP sends a nil response at step 420 to the SCP which then causes the SSP to connect the call through to the service platform 16 at step 425. If however, as expected the customer provides signalling indicative of a message for a particular individual at the selected destination then the prompt and collect response is sent to the SCP which determines the specific identity at step 270 therefore causing connection to the service platform 16 with an appropriate identity so that the message is associated with the particular customer. Thus referring to Figure 5, within the system of the invention the line identity location and answering options are stored in a data store, these being those referred to at steps 210, 230 and 245. The various customers at the line identity are identified by a customer field for each customer and associated with each customer number is a location at which the customer may have recorded his or her identity. This enables the system to recover stored voice information from each individual customer. Space is provided to store location of each message associated with the particular customer so that on retrieval request from the identified customer, messages located in the service platform 16 can be identified. Finally, the retrieval options such as remote access allowed or disallowed, and the customers PIN are stored.

In an alternative method of operation, where the system is preprogrammed by customer action or by self learning to recognise that certain calling line identities from called parties usually leave messages for a particular customer, CLI may be used to select the identity without prompt and collect requirement. A confirmation message may be transmitted to the calling party indicating that the message will be stored for a particular customer and inviting the customer to press a key if this is not the required customer on this occasion.

One option given to the customer may be to leave a message for all customers at the line identity, in which case access and location of the associated message may be stored in each customer's data bank in figure 5.

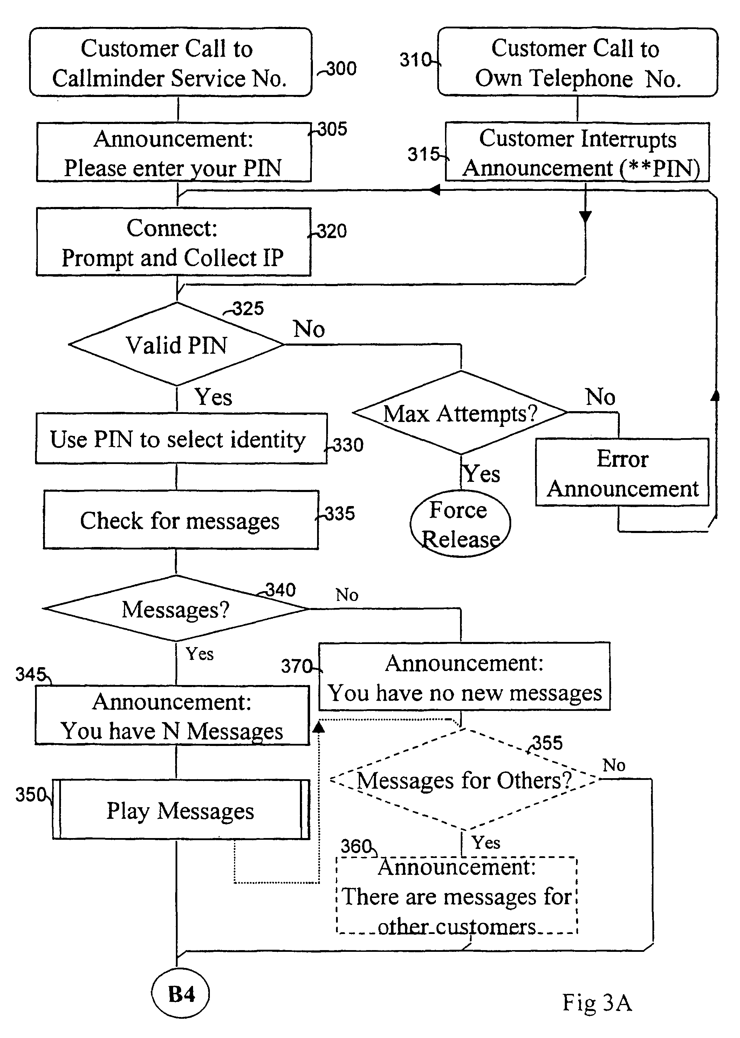

Turning now to figure 3, two routes are shown by which a customer may retrieve messages from the service platform 16. Thus considering step 300, if the customer is based at the home destination and uses the telephone line 3 to effect a call to a call minder service number, then the service platform 16 will request that the customer enters the personal identification number with which he is associated at step 305. In the alternative, if a customer is remote and wishes to recover or check for messages, then by dialling the home telephone number from a remote location and waiting for the speech applications platform or the intelligent peripheral to be connected to the line to provide call minder announcements and interrupting such announcements using prompt and collect facility at step 315 to enter, for example, ** and PIN indicating a service call for message retrieval.

In the case of a direct access call from the home telephone line 3, a prompt and collect peripheral will be connected to the line and the customer may then enter the PIN. The validity of the PIN in association with the line 3 will be checked at step 325. Several PINs will be associated with the particular line 3, each being allocated to a particular subscriber. Thus, assuming that a valid PIN is entered then at step 330 the PIN is used to determine from the data store of Figure 5 whether there are messages for the selected customer.

If at step 340 it is determined that there are messages for the selected customer then at step 345 the number of messages for the particular dedicated user is enunciated and the messages may be played. This is shown as a macro function "Play Messages" at step 350 which is a function of known network based answering services.

On exit from the play messages macro routine, the system may carry out a check as at indicated at 355 to determine whether there are messages for other users at the location. Access to this route may be dependant upon the retrieval options set by each of the users. If this option is available and there are messages for other users at the line 3 then a simple announcement that there are messages for other customers possibly with the customer identity may be played.

If the other customers are present then an invitation to enter the PIN of the customer for which messages are available (step not shown),may be provided.

Returning briefly to step 340, if there are no messages associated with the selected customer as identified at step 330 by the PIN, then the simple announcement at step 370 that there are no new messages may be provided.

If there are no messages associated with the line at all, then the system may skip directly from step 370 or step 345 to an invitation to the customer to review the answering options associated with the line. Thus if the customer seeks to review, as indicated at 375, the macro function of step 380 "Call answering options review" in which the current status relating to the line is played to the customer and invitation made to set or reset the options. The customer may now be invited at step 305 to review retrieval options associated with the particular customer. Again at step 390, if the customer chooses to review the retrieval options, an opportunity to change PIN and remote access for example and/or to modify calling line identities whose calls would normally be associated with the particular customer, may be given as indicated at step 395. On completion of all of the retrieval tasks, or on clear down of the customer line prior to completion of the programme, then the call will be cleared in the normal manner.

It is noted that in the play messages function, such features as < < Store > >, < < Delete > >, and the like will be performed in known manner. It should be noted that the message location store in figure 5 may have an associated marker indicating that a stored message has already been read or accessed by the customer.

While herein, at step 370 it is assumed that the play message macro may not be entered directly, it will be appreciated that reviewing previously read and stored messages is an option available to the customer in which case the play message macro 350 may be diverted to even if there are no new messages to be played.

In a further development of the system, hereinbefore described, where at least one user at the line 3 has requested call minder service, in particular where CLI is used, then incoming call diversion to the call answering service may be based on the CLI. Thus if one of the multiple users of a line 3 is absent all calls which would normally result in storage of a message for that particular customer may be diverted to the call answering service while other calls are switched through normally.

It will be appreciated that for the above kind of service prompt and collect prior to call connection may also be used to identify the required customer. Thus call diversion to message storage and automatic answering may be end user dependant.

## Claims

1. A telecommunications network including a network based telephone answering system to which calls for a particular network destination may be diverted, the network including control means (16) programmable by customer action to select conditions under which some or all calls for the destination are diverted, **characterised in that** the telephone answering system includes means (270) selectively to store respective messages and to associate such messages with a particular one of a plurality of customers of the destination in response to predetermined characteristics for an incoming call, and means to selectively play messages only on receipt of signals (305) identifying a particular customer.

2. A telecommunications network as claimed in claim 1, further **characterised in that** the telephone answering system is responsive to receipt of a diverted call (240) to cause information identifying each of said plurality of customers to be transmitted (410) to a calling customer, said system connecting means responsive to calling customer action to associate a subsequently deposited message with a particular one of said plurality of customers.

3. A telecommunications network as claimed in claim 1 or claim 2, further **characterised in that** the telephone answering system is responsive to network signals identifying the calling party to associate a message received during the same call with a particular one of the plurality of customers.

4. A telecommunications network as claimed in claim 3, further **characterised in that** calls are selectively diverted to the telephone answering system or are connected to the network destination in dependence upon the network signals identifying the calling party line.

5. A telecommunications network as claimed in any preceding claim, further **characterised in that** calls for at least one of the plurality of customers of the network destination are required to be diverted to the telephone answering system while calls for at least one other of the plurality of customers are to be connected to the particular network destination the network being responsive to calls for the particular network destination to provide information to the calling party line identifying each of the plurality of customers and responding to customer reaction thereto to connect the call either to the network destination or to the telephone answering system.

6. A telecommunications network as claimed in claim 2, further **characterised in that** in the absence of a reaction to the information provided, a subsequently stored message is associated with more than one of the plurality of customers.

7. A telecommunications network as claimed in claim 2 or claim 6, further **characterised in that** the telephone answering system is responsive to signalling from a calling party to associate a subsequently deposited message with each of the plurality of customers.

8. A telecommunications network as claimed in any preceding claim, further **characterised in that** the telephone answering system is responsive to signalling identifying a particular one of the plurality of customers (330) to play back respective messages stored for that customer.

9. A telecommunications network as claimed in claim 8, further **characterised in that** subsequent to delivery of messages for the particular customer messages not associated with any particular customer or associated with all of the plurality of customers are played to the calling customer.

10. A telecommunications network as claimed in claim 8 or claim 9, further **characterised in that** subsequent to playing messages for the identified one of the plurality of customers the system causes a voice announcement (355, 360) indicative of the presence or absence of messages for other users at the same network destination.

## Patentansprüche

1. Telekommunikationsnetzwerk mit einem netzwerkbasierten Anrufbeantwortersystem, an das Anrufe an ein bestimmtes Ziel im Netzwerk umgeleitet werden können, wobei das Netzwerk eine Steuereinrichtung (16) enthält, die durch Handlung des Kunden programmiert werden kann, um Bedingungen auszuwählen, unter denen manche oder alle Anrufe an das Ziel umgeleitet werden, **dadurch gekennzeichnet, dass** das Anrufbeantwortersystem eine Einrichtung (270) enthält, um entsprechende Nachrichten selektiv zu speichern und solche Nachrichten einem bestimmten von mehreren Kunden an dem Ziel als Reaktion auf vorher festgelegte Eigenschaften für einen ankommenden Anruf zuzuordnen, und eine Einrichtung, um Nachrichten nur nach Empfang von Signalen (305) abzuspielen, die einen bestimmten Kunden identifizieren.

2. Telekommunikationsnetzwerk nach Anspruch 1, weiter **dadurch gekennzeichnet, dass** das Anrufbeantwortersystem auf den Empfang eines umgeleiteten Anrufs (240) reagiert, indem es veranlasst, dass Informationen, die jeden von mehreren Kunden identifizieren, an einen anrufenden Kunden gesendet werden (410), wobei die Systemverbindungseinrichtung auf Handlungen des anrufenden Kunden reagiert, um eine nachfolgend hinterlassene Nachricht einem bestimmten von mehreren Kunden zuzuordnen.

3. Telekommunikationsnetzwerk nach Anspruch 1 oder Anspruch 2, weiter **dadurch gekennzeichnet, dass** das Anrufbeantwortersystem auf Netzwerksignale reagiert, die die anrufende Partei identifizieren, um eine Nachricht, die während desselben Anrufs empfangen wurde, einem bestimmten von mehreren Kunden zuzuordnen.

4. Kommunikationsnetzwerk nach Anspruch 3, weiter **dadurch gekennzeichnet, dass** Anrufe in Abhängigkeit von den Netzwerksignalen, die die Leitung der anrufenden Partei identifizieren, selektiv zu dem Anrufbeantwortersystem umgeleitet werden oder mit dem Ziel im Netzwerk verbunden werden.

5. Telekommunikationsnetzwerk nach einem oder mehreren der vorangehenden Ansprüche, weiter **dadurch gekennzeichnet, dass** für Anrufe an wenigstens einen von mehreren Kunden des Ziels im Netzwerks gewünscht wird, dass sie an das Anrufbeantwortersystem umgeleitet werden, während Anrufe für wenigstens einen anderen von mehreren Kunden mit dem bestimmten Ziel im Netzwerk verbunden werden sollen, wobei das Netzwerk auf Anrufe an das bestimmte Ziel im Netzwerk reagiert, indem es der Leitung der anrufenden Partei Informationen bereitstellt, die jeden von mehreren Kunden identifizieren, und auf die Reaktion des Kunden darauf antwortet, indem es den Anrufer entweder mit dem Ziel im Netzwerk oder mit dem Anrufbeantwortersystem verbindet.

6. Telekommunikationsnetzwerk nach Anspruch 2, weiter **dadurch gekennzeichnet, dass** in Abwesenheit einer Reaktion auf die bereitgestellten Informationen eine nachfolgend gespeicherte Nachricht mehr als einem von mehreren Kunden zugeordnet wird.

7. Telekommunikationsnetzwerk nach Anspruch 2 oder Anspruch 6, weiter **dadurch gekennzeichnet, dass** das Anrufbeantwortersystem auf Signalisierung von einer anrufenden Partei reagiert, um eine nachfolgend hinterlassene Nachricht jedem von mehreren Kunden anzuordnen.

8. Telekommunikationsnetzwerk nach einem oder mehreren der vorangehenden Ansprüche, weiter **dadurch gekennzeichnet, dass** das Anrufbeantwortersystem auf Signalisierung reagiert, die einen bestimmten von mehreren Kunden (330) identifiziert, um entsprechende Nachrichten, die für diesen Kunden gespeichert sind, wiederzugeben.

9. Telekommunikationsnetzwerk nach Anspruch 8, weiter **dadurch gekennzeichnet, dass** dem anrufenden Kunden nach der Lieferung von Nachrichten für den bestimmten Kunden Nachrichten abgespielt werden, die nicht irgend einem bestimmten Kunden zugeordnet sind oder allen von mehreren Kunden zugeordnet sind.

10. Telekommunikationsnetzwerk nach Anspruch 8 oder Anspruch 9, weiter **dadurch gekennzeichnet, dass** nach dem Abspielen von Nachrichten für den identifizierten von mehreren Kunden das System eine Sprachansage (355, 360) auslöst, die die Anwesenheit oder Abwesenheit von Nachrichten für andere Benutzer an dem gleichen Ziel im Netzwerk anzeigt.

## Revendications

1. Réseau de télécommunications comprenant un système de répondeur téléphonique à base de réseau vers lequel des appels destinés à une destination particulière du réseau peuvent être transférés, le réseau comprenant un moyen de commande (16) programmable par une action de l'usager pour sélectionner des conditions dans lesquelles certains appels ou tous les appels pour la destination sont transférés, **caractérisé en ce que** le système de répondeur téléphonique comprend un moyen (270) pour mémoriser sélectivement des messages respectifs et pour associer de tels messages à un usager particulier parmi une pluralité d'usagers de la destination en réponse à des caractéristiques prédéterminées pour un appel entrant, et un moyen destiné à restituer sélectivement des messages uniquement à la réception de signaux (305) identifiant un usager particulier.

2. Réseau de télécommunications selon la revendication 1, **caractérisé en outre en ce que** le système de répondeur téléphonique répond à la réception d'un appel transféré (240) pour faire que des informations identifiant chaque usager de ladite pluralité d'usagers soient transmises (410) à un usager appelant, ledit système connectant un moyen pour, en réponse à une action d'un usager appelant, associer un message déposé ultérieurement à un usager particulier parmi ladite pluralité d'usagers.

3. Réseau de télécommunications selon la revendication 1 ou la revendication 2, **caractérisé en outre en ce que** le système de répondeur téléphonique est sensible à des signaux du réseau identifiant l'interlocuteur appelant pour associer un message reçu pendant le même appel à un usager particulier parmi la pluralité d'usagers.

4. Réseau de télécommunications selon la revendication 3, **caractérisé en outre en ce que** des appels sont transférés sélectivement vers le système de répondeur téléphonique ou sont connectés à la destination du réseau suivant les signaux du réseau identifiant la ligne de l'interlocuteur appelant.

5. Réseau de télécommunications selon l'une quelconque des revendications précédentes, **caractérisé en outre en ce que** des appels, destinés à au moins un usager de la pluralité d'usagers de la destination du réseau, doivent être transférés vers le système de répondeur téléphonique alors que des appels, destinés à au moins un autre usager de la pluralité d'usagers, doivent être connectés à la destination de réseau particulière, le réseau étant sensible à des appels pour la destination de réseau particulière afin de fournir des informations à la ligne de l'interlocuteur appelant, identifiant chaque usager de la pluralité d'usagers et répondant à une réaction de l'usager à celles-ci pour connecter l'appel soit à la destination du réseau soit au système de répondeur téléphonique.

6. Réseau de télécommunications selon la revendication 2, **caractérisé en outre en ce qu'**en l'absence d'une réaction aux informations fournies, un message mémorisé ultérieurement est associé à plus d'un seul usager de la pluralité d'usagers.

7. Réseau de télécommunications selon la revendication 2 ou la revendication 6, **caractérisé en outre en ce que** le système de répondeur téléphonique est sensible à une signalisation provenant d'un interlocuteur appelant, pour associer un message déposé ultérieurement à chaque usager de la pluralité d'usagers.

8. Réseau de télécommunications selon l'une quelconque des revendications précédentes, **caractérisé en outre en ce que** le système de répondeur téléphonique est sensiblement à une signalisation identifiant un usager particulier parmi la pluralité d'usagers (330) pour restituer des messages respectifs mémorisés pour cet usager.

9. Réseau de télécommunications selon la revendication 8, **caractérisé en outre en ce que** après une délivrance de messages pour l'usager particulier, des messages, qui ne sont pas associés à un usager particulier quelconque ni associés à la totalité de la pluralité des usagers, sont restitués pour l'usager appelant.

10. Réseau de télécommunications selon la revendication 8 ou la revendication 9, **caractérisé en outre en ce que** après une restitution des messages pour l'usager identifié parmi la pluralité d'usagers, le système provoque une annonce vocale (355, 360) indicative de la présence ou de l'absence des messages pour d'autres usagers à la même destination du réseau.
